# FASCICULE DE BREVET EUROPEEN

(11) **EP 1 621 950 B1**
(45) Date de publication et mention de la délivrance du brevet: **08.12.2010**
(21) Numéro de dépôt: 05291322.5
(22) Date de dépôt: 21.06.2005
(51) Int. Cl.: G05D 16/20

(54) **Servovalve de régulation de pression à débit de fuite réduit**
Druckregelventil mit reduziertem Leckstrom
Pressure regulating valve with reduced leak flow

(30) Priorité: 27.07.2004 FR 0408277
(43) Date de publication de la demande: 01.02.2006
(73) Titulaire: IN-LHC, 28200 Chateaudun (FR)
(72) Inventeur: Grancher, Raymond, 45740 Lailly en Val (FR)
(74) Mandataire: Parzy, Benjamin Alain

(56) Documents cités:
- WO-A-97/43154
- DE-A1- 3 739 824
- US-A- 4 785 849
- US-A- 5 381 817
- US-B1- 6 382 248

## Description

L'invention concerne une servovalve de régulation de pression à débit de fuite réduit.

### ARRIERE-PLAN DE L'INVENTION

Ce type de servovalve est par exemple utilisé pour contrôler des freins hydrauliques de véhicule, notamment des freins d'aéronefs.

On connaît des servovalves à régulation de pression comportant un corps présentant un port d'utilisation, un port d'alimentation et un port de retour, et un tiroir de distribution monté mobile dans le corps de façon à mettre en relation le port d'utilisation soit avec le port d'alimentation soit avec le port de retour. Les extrémités du tiroir définissent avec le corps deux chambres de pilotage connectées à des buses qui sont agencées en regard l'une de l'autre pour déboucher dans une cavité reliée au port de retour. Une palette s'étendant dans la cavité entre les buses est montée mobile de façon commandée. Les chambres de pilotage sont reliées via des restricteurs au port d'alimentation.

Le déplacement commandé de la palette entre les buses permet de moduler les pressions régnant dans les chambres de pilotage, et donc de déplacer le tiroir en vue de moduler la pression d'utilisation.

Ce type de servovalve a pour inconvénient de présenter un débit de fuite important. En effet, du fluide hydraulique s'écoule en permanence par les buses pour être redirigé vers le port de retour.

Cette fuite oblige à dimensionner les réservoirs de fluide hydraulique en conséquence de façon à pouvoir assurer un freinage du véhicule même en cas de panne de génération hydraulique.

L'art antérieur est notamment illustré par le document US 6 382 248.

### OBJET DE L'INVENTION

L'invention a pour objet une servovalve de régulation de pression à débit de fuite réduit.

### BREVE DESCRIPTION DE L'INVENTION

En vue de la réalisation de ce but, on propose une servovalve de régulation de pression comportant un corps présentant un port d'utilisation, un port d'alimentation et un port de retour, un tiroir de distribution monté mobile dans le corps de façon à mettre en relation le port d'utilisation soit avec le port d'alimentation soit avec le port de retour, le tiroir définissant avec le corps au moins une chambre de pilotage connectée à une buse qui est agencée pour déboucher dans une cavité reliée au port de retour, une palette étant montée mobile de façon commandée dans la cavité en regard de la buse, caractérisé en ce que la chambre de pilotage est reliée au port d'utilisation.

Le port d'utilisation se trouve plus souvent à des pressions inférieures à la pression d'alimentation. La connexion selon l'invention de la chambre de pilotage au port d'utilisation permet un abaissement de la pression régnant en moyenne dans la chambre de pilotage, impliquant un abaissement concomitant du débit de fuite par la buse.

Selon un aspect particulier de l'invention, la servovalve ne comporte qu'une seule chambre de pilotage et qu'une seule buse.

L'utilisation d'une seule buse permet de réduire encore plus le débit de fuite.

### BREVE DESCRIPTION DES DESSINS

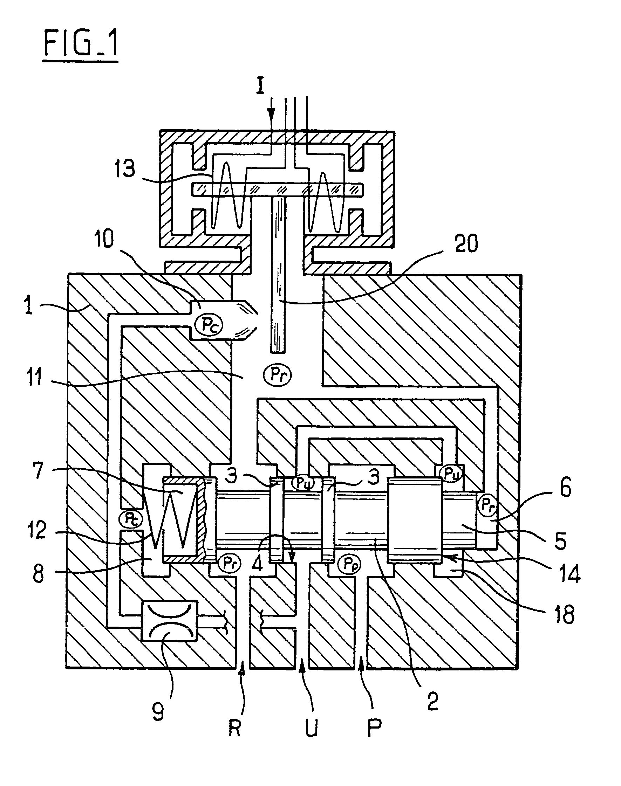

L'invention sera mieux comprise à la lumière de la description qui suit en référence à l'unique figure du dessin annexé illustrant en coupe schématique une servovalve selon l'invention.

### DESCRIPTION DETAILLEE DE L'INVENTION

En référence à la figure, la servovalve de régulation de pression selon l'invention comporte un corps 1 comportant un port d'alimentation P destiné à être connecté à une source de fluide hydraulique sous pression, un port de retour R destiné à être connecté à un circuit de retour du fluide vers un réservoir (non représenté), et un port d'utilisation U destiné à être connecté à un équipement, par exemple la cavité hydraulique d'un frein d'aéronef (non représenté).

Un tiroir de distribution 2 est monté dans un orifice calibré du corps 1 pour coulisser. Le tiroir 2 comporte des portées 3 qui coopèrent avec un faible jeu avec une partie centrale 4 de l'orifice calibré et qui s'étendent entre le port d'utilisation U et le port de retour R d'une part, et entre le port d'utilisation U et le port d'alimentation P d'autre part.

Les passages subsistant du fait du jeu de coulissement entre les portées 3 et la partie centrale 4 de l'orifice calibré mettent en communication le port d'utilisation U au port de retour R et au port d'alimentation P. Dans la position représentée, les passages subsistant entre chacune des portées 3 et la partie centrale 4 de l'orifice calibré sont égaux, de sorte que la pression d'utilisation Pu est égale à la moyenne de la pression de retour Pr et de la pression d'alimentation Pp.

Lorsque le tiroir se déplace, l'un des passages augmente tandis que l'autre diminue, de sorte que la pression d'utilisation prend pour valeur une moyenne pondérée par les sections de passage de la pression de retour et de la pression d'alimentation. Le déplacement du tiroir permet donc de régler la pression d'utilisation Pu à une valeur située entre la pression de retour Pu et la pression d'alimentation Pp.

Le tiroir 2 comporte une première extrémité 5 qui définit avec le corps 1 une chambre 6 qui est reliée au port de retour R et dans laquelle règne la pression de retour Pr qui s'applique sur la première extrémité 5.

Le tiroir 2 comporte une seconde extrémité 7 qui définit avec le corps 1 une chambre de pilotage 8 qui est reliée au port d'utilisation U via un restricteur 9 et dans laquelle règne une pression de commande Pc qui s'applique sur la seconde extrémité 7.

La chambre de pilotage 8 est par ailleurs reliée à une buse 10 qui débouche dans une cavité 11 du corps 1 reliée au port de retour R et dans laquelle règne la pression de retour Pr. Dans la cavité 11, et en regard de la buse 10, s'étend une palette 20 mobile qui est actionné par un moteur couple 13 électrique (alimenté par un courant électrique I) pour s'éloigner ou se rapprocher de la buse 10. Le déplacement de la palette 20 en regard de la buse 10 permet de moduler à volonté la pression de commande Pc régnant dans la buse 10 (et donc dans la chambre de pilotage 8) entre la pression de retour et la pression d'utilisation.

En outre, un ressort 12 est aménagé dans la chambre de pilotage 8 pour agir sur le tiroir 2.

Enfin, une rétroaction portant sur la pression d'utilisation Pu est organisée en faisant agir cette pression dans une chambre de rétroaction 18 définie entre le corps 1 et le tiroir 2, de sorte que la pression d'utilisation Pu agisse sur une section annulaire 14 du tiroir 2 à l'encontre de l'action du ressort 12 et de l'action de la pression de commande Pc sur la deuxième extrémité 7 du tiroir 2.

Le tiroir 2 trouve ainsi un équilibre entre l'action du ressort 12, l'action de la pression de commande Pc sur la seconde extrémité 7, l'action de la pression d'utilisation Pu sur la section annulaire 14, et enfin l'action de la pression de retour Pr sur la première extrémité 5.

La connexion de la buse 10 au port d'utilisation U au lieu du port d'alimentation P limite le débit de fuite par la buse dans la mesure où la pression d'utilisation Pu est pratiquement toujours inférieure à la pression d'alimentation Pc. En particulier, lorsque l'actionneur relié au port d'utilisation U n'est pas sollicité (ce qui est une situation courante dans le cas d'un frein d'aéronef), cette pression est légèrement supérieure à la pression de retour Pr, de sorte qu'il n'y a peu ou pas de débit par la buse. La fuite est alors quasi nulle.

L'utilisation d'une unique buse permet de diminuer encore plus le débit de fuite

Diverses expérimentations ont permis de constater que la servovalve illustrée ici présente une relation entre le courant I de commande du moteur couple 13 actionnant la palette 20 et la pression d'utilisation Pu qui est remarquablement linéaire.

L'invention n'est pas limitée à ce qui vient d'être décrit, mais bien au contraire englobe toute variante entrant dans le cadre défini par les revendications.

En particulier, bien que la servovalve illustrée ne comporte qu'une seule chambre de pilotage, la servovalve de l'invention pourra comporter deux chambres de pilotage reliées chacune à une buse, du moment qu'au moins l'une des chambres de pilotage soit reliée au port d'utilisation.

## Revendications

1. Servovalve de régulation de pression, comportant un corps (1) présentant un port d'utilisation (U), un port d'alimentation (P) et un port de retour (R), un tiroir de distribution (2) monté mobile dans le corps (1) de façon à mettre en relation le port d'utilisation soit avec le port d'alimentation soit avec le port de retour, le tiroir définissant avec le corps au moins une chambre de pilotage (8) connectée à une buse (10) qui est agencée pour déboucher dans une cavité (11) reliée au port de retour, une palette (20) s'étendant dans la cavité en regard de la buse en étant montée mobile de façon commandée, **caractérisée en ce que** la chambre de pilotage (8) est reliée au port d'utilisation (4).

2. Servovalve selon la revendication 1, **caractérisée en ce qu'**elle ne comporte qu'une seule chambre de pilotage (8) et qu'une seule buse (10).

3. Servovalve selon la revendication 1, **caractérisée en ce que** la chambre de pilotage (8) est reliée au port d'utilisation (4) via un restricteur (9).

## Claims

1. A pressure-regulator servovalve comprising a body (1) having a utilization port (U), a pressure feed port (P), and a return port (R), a distributor spool (2) movably mounted in the body (1) to put the utilization port into communication either with the feed port or with the return port, the spool co-operating with the body to define at least one pilot chamber (8) connected to a nozzle (10) that is arranged to open out into a cavity (11) connected to the return port, a vane (20) extending in the cavity facing the nozzle and being mounted to be moved in controlled manner, the servovalve being **characterized in that** the pilot chamber (8) is connected to the utilization port (4).

2. A servovalve according to claim 1, **characterized in that** it has only one pilot chamber (8) and only one nozzle (10).

3. A servovalve according to claim 1, **characterized in that** the pilot chamber (8) is connected to the utilization port (4) via a constriction (9).

## Patentansprüche

1. Servoventil zur Druckregelung, umfassend ein Gehäuse (1), das eine Nutzöffnung (U), eine Zuführöffnung (P) und eine Rücklauföffnung (R) aufweist, sowie einen Verteilungsschieber (2), der derart beweglich in dem Gehäuse (1) gelagert ist, dass er die Nutzöffnung entweder mit der Zuführöffnung oder mit der Rücklauföffnung in Verbindung bringt, wobei der Schieber mit dem Gehäuse mindestens eine Steuerkammer (8) begrenzt, die mit einer Düse (10) verbunden ist, die derart ausgebildet ist, dass sie in einen Hohlraum (11) mündet, der mit der Rücklauföffnung verbunden ist, wobei sich eine Platte (20) in dem Hohlraum gegenüber der Düse erstreckt, indem sie auf gesteuerte Weise beweglich gelagert ist, **dadurch gekennzeichnet, dass** die Steuerkammer (8) mit der Nutzöffnung (4) verbunden ist.

2. Servoventil nach Anspruch 1, **dadurch gekennzeichnet, dass** es nur eine einzige Steuerkammer (8) und nur eine einzige Düse (10) umfasst.

3. Servoventil nach Anspruch 1, **dadurch gekennzeichnet, dass** die Steuerkammer (8) mit der Nutzöffnung (4) über eine Drosselvorrichtung (9) verbunden ist.
